# EUROPEAN PATENT SPECIFICATION

(11) **EP 3 451 824 B1**
(45) Date of publication and mention of the grant of the patent: **16.09.2020**
(21) Application number: 17726840.6
(22) Date of filing: 03.05.2017
(51) Int. Cl.: A01J 25/00, A01J 25/12

(54) **METHOD AND PLANT FOR PROCESSING STRETCHED-CURD CHEESES**
VERFAHREN UND ANLAGE ZUR VERARBEITUNG VON PASTA FILATA KÄSE
PROCÉDÉ ET INSTALLATION DE TRAITEMENT DE FROMAGES À CAILLÉ ÉTIRÉ

(30) Priority: 03.05.2016 IT UA20163092; 26.04.2017 IT 201700045291
(43) Date of publication of application: 13.03.2019
(73) Proprietor: Egidio Galbani S.r.l., 20149 Milano (IT)
(72) Inventor: BOFFELLI, Giuliano, 20149 Milano (IT); FORTI, Alice, 20149 Milano (IT)
(74) Representative: Petraz, Gilberto Luigi
(86) International application number: PCT/EP2017/060573
(87) International publication number: WO 2017/191213

(56) References cited:
- EP-A1- 0 625 304
- WO-A1-99/53749
- DE-A1-102004 029 408
- FR-A1- 2 145 491

## Description

### FIELD OF THE INVENTION

The present invention concerns a method and a plant for processing stretched-curd cheeses, for example mozzarellas and suchlike.

### FIELD OF THE INVENTION

Stretched-curd cheeses are known, such as mozzarellas and suchlike, in which the processing method comprises a step of stretching the melted curd, which is then fed to a forming step to obtain portions of stretched curd with the desired size and shape, see e.g. WO 99/53749 A1 which discloses the preamble of claims 1 and 7, and DE 10 2004 029408 A1. After this, there is a step of hardening the stretched curd in a cooling bath and finally a packaging step.

The forming step takes place inside forming machines that receive the stretched curd at entrance and discharge at exit the portions of stretched curd obtained inside the cooling baths.

Forming machines of a known type essentially consist of a frame that supports a hopper that feeds the stretched curd toward the entrance ends of a plurality of feed screws whose corresponding exit ends face a forming roll. The forming roll consists of a cylindrical body provided on a lateral surface with a plurality of cavities with the shape and volume of the portions of stretched curd that are to be obtained. The cavities are distributed staggered on the surface of the roll along respective generating lines in order to optimize the productive capacity of the machine, and the roll is motorized in continuous rotation around its longitudinal axis.

Between the exit mouths of the feed screws and the forming roll an insert is interposed, made of plastic material and having a longitudinal slit facing the exit mouths of the feed screws for the passage of the stretched curd toward the cavities of the roll. The insert has a concave surface positioned tangent to the external surface of the roll which partly surrounds the surface thereof. In the rotation of the roll, portions of stretched curd pressed inside the cavities that gradually face the slit are separated from the remaining mass of curd in correspondence with the edge of the slit. The insert allows to distribute the stretched curd in the cavities, to cut the various portions of curd pressed inside the cavities and allows the rotation of the roll without chafing on the other metal elements of the machine.

When the cavities filled with stretched curd, as they rotate, are positioned in the lower zone of the roll, free of the insert, the portions obtained inside the cooling system are discharged.

Along the rotation arc of the roll inside the insert, jets of water can be provided to cool the roll and the portions of stretched curd contained in the cavities, promoting their detachment from the cavities and the discharge into the cooling tank below.

For small format products, systems can be provided that facilitate discharge from inside the cavities by injecting water.

The hardening system generally provided downstream of the forming machine consists of one or more cooling tanks, mechanized and filled with water at a controlled temperature, or of small carriers, again filled with water, in which the products are moved manually.

It is necessary to control the temperature and to move the water both to maintain the shape of the cheeses obtained, and also for microbiological requirements.

Indeed, during cooling, the products release fat which is dispersed in the water, making it dirty and increasing the bacterial load present therein.

To limit and control the bacterial load, in order to guarantee a certain duration of the products and to prevent contamination, the cooling water has to be replaced gradually and continuously, that is, systems must be used to filter the fat or UV lamps used to disinfect the water.

Furthermore, during cooling, the products can rub and knock against each other or against the metal walls of the tanks or carriers, with the risk of damaging their surfaces, to the extent of becoming unappealing for consumers and of dispersing fragments in the water that can make it even dirtier.

These known production systems are not without disadvantages, including the fact they need to provide additional systems of control, filtering and/or purifying the cooling water, which increase the installation costs of the plants, increase the water consumption and need additional maintenance.

Moreover, in the event of malfunctions, there is always the risk that the product can be contaminated by the bacterial load present in the cooling water, with a consequent risk for the health of consumers and damage to the image of the producers.

Furthermore, the hardening step entails the risk that the products can deteriorate from an esthetic point of view, and become visually unpleasant for consumers.

Other limitations and disadvantages of conventional solutions and technologies will be clear to a person of skill after reading the remaining part of the present description with reference to the drawings and the description of the embodiments that follow, although it is clear that the description of the state of the art connected to the present description must not be considered an admission that what is described here is already known from the state of the prior art.

There is therefore a need to perfect a method and plant for processing stretched-curd cheeses that can overcome at least one of the disadvantages of the state of the art.

One purpose of the present invention is therefore to obtain a method and plant for processing stretched-curd cheeses which guarantee optimum hygiene conditions of the products and an increase in their duration, without requiring the use of systems to control, purify and/or filter the cooling water, thus simplifying the production plants and reducing their installation costs, running costs and maintenance costs.

Within the framework of this purpose, another purpose of the present invention is to prevent the risk of contaminating the cheeses obtained, so as to safeguard consumers' health and to prevent damage to the image of producers.

Another purpose of the present invention is to preserve the integrity of the cheeses obtained and not to compromise the esthetic characteristics appreciated by consumers.

Another purpose of the present invention is not to penalize the productivity of the process and to simplify the equipment usually used for the various processing steps, with particular reference to the hardening step.

Finally, another purpose of the present invention is to present a simple structure, relatively easy to actuate in practice, safe to use and effective in functioning, and also at a relatively limited cost.

The Patentee has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, a method for processing stretched-curd cheeses according to the present invention comprises the following sequence of steps:
- a step of stretching the melted cheese to obtain stretched curd;
- a step of forming said stretched curd to obtain portions of stretched curd with predefined shape and weight;
- a step of packaging said portions of stretched curd to obtain packaged portions;
- a step of hardening said packaged portions in a bath with a controlled temperature to obtain already packaged stretched-curd cheeses, wherein said hardening step comprises one or more cooling steps at a controlled temperature.

The packaging step can provide the direct release of the portions of stretched curd in a series of packages located downstream of the forming step which provides at least a forming roll to form the portions of stretched curd.
The packages, in the release step of the portions of stretched curd, can be aligned in an alignment direction in proximity to the forming roll.

The alignment direction of the packages can be substantially horizontal, therefore the packaging step can take place substantially with packages disposed horizontally.

The alignment direction of the packages can be substantially parallel to a longitudinal axis of rotation of the forming roll.

The hardening step comprises one or more cooling steps at a controlled temperature.

The packaging step can provide to introduce protective liquid inside the packages.

All these purposes are also obtained by the present plant for processing stretched-curd cheeses. According to a characteristic feature of the present invention, the plant comprises a stretching station to obtain stretched-curd cheese, a forming station of the stretched curd to obtain portions of stretched curd unloaded directly at entrance to a packaging station downstream of which a hardening station is provided, to obtain already packaged stretched-curd cheeses, wherein said hardening station consists of at least a bath of cooling liquid at a controlled temperature.

The forming station can comprise a forming machine provided with at least a forming roll.

The forming roll can comprise a series of cavities in which the portions of stretched curd are positioned; the cavities are associated with feed means to feed compressed air able to promote the passage of the portions of stretched curd from the cavities to the packages located in proximity to the forming roll.

These and other aspects, characteristics and advantages of the present disclosure will be better understood with reference to the following description, drawings and attached claims. The drawings, which are integrated and form part of the present description, show some embodiments of the present invention, and together with the description, are intended to describe the principles of the disclosure.

The various aspects and characteristics described in the present description can be applied individually where possible. These individual aspects, for example aspects and characteristics described in the attached dependent claims.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a flow chart that shows the steps of a method to process stretched-curd cheeses according to the invention;
- fig. 2 is a three-dimensional view of a forming machine to process stretched-curd cheeses;
- fig. 3 is a view of the machine in fig. 2, but with the forming roll uncovered;
- fig. 4 is a three-dimensional view of the machine in fig. 2 of the forming roll of the forming machine;
- fig. 5 is an exploded three-dimensional view from in front of the upper portion of the machine in fig. 2;
- fig. 6 is an exploded three-dimensional view from behind of the upper portion of the machine in fig. 2;
- fig. 7 is a longitudinal section view of the upper portion of the machine in fig. 2;
- fig. 8 is a view on an enlarged scale of a portion of fig. 7;
- fig. 9 is a section view according to the section plane IX-IX of fig. 7, in which, schematically, a plurality of product packages are shown.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

We shall now refer in detail to the various embodiments of the present invention, of which one or more examples are shown in the attached drawings. Each example is supplied by way of illustration of the invention and shall not be understood as a limitation thereof. For example, the characteristics shown or described insomuch as they are part of one embodiment can be adopted on, or in association with, other embodiments to produce another embodiment. It is understood that the present invention shall include all such modifications and variants.

Before describing these embodiments, we must also clarify that the present description is not limited in its application to details of the construction and disposition of the components as described in the following description using the attached drawings. The present description can provide other embodiments and can be obtained or executed in various other ways. We must also clarify that the phraseology and terminology used here is for the purposes of description only, and cannot be considered as limitative.

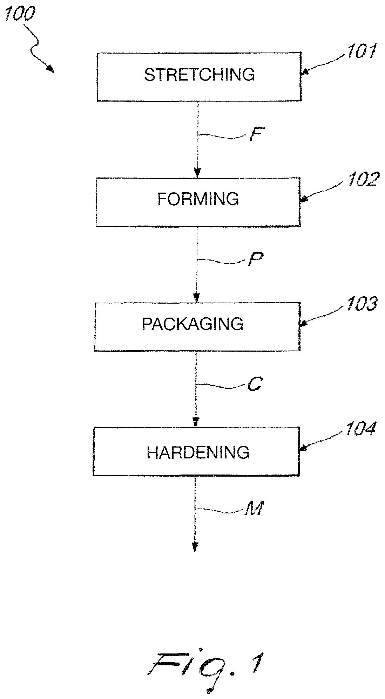

With particular reference to fig. 1, a method for processing stretched-curd cheeses is denoted in its entirety by the reference number 100.

The method 100 provides the following sequence of steps:
- a step of stretching 101 the melted cheese to obtain stretched curd;
- a step of forming 102 the stretched curd F to obtain portions P of stretched curd with predefined shape and weight;

- a step of packaging 103 the portions P to obtain packaged portions C; and finally,
- a step of hardening 104 the packaged portions C in a bath with a controlled temperature to obtain already packaged cheeses M of stretched curd, such as mozzarellas or suchlike.

We must point out that advantageously the packaging step is provided directly downstream of the forming step, while the hardening step follows the latter.

According to the method 100, the possibilities of contaminating the cheeses during the processing step with the cooling liquid are substantially zero, thus optimizing the quality level and increasing the duration of the cheeses before consumption.

Furthermore, in this way the hardening step can be carried out in a bath of liquid (water) at a controlled temperature, but without needing to provide mixing members, since the cheeses being processed are protected inside the package which also contains a certain volume of protective liquid. No less importantly, the cooling liquid does not need particular treatments and/or controls from a microbiological point of view, since it does not enter into direct contact with the product.

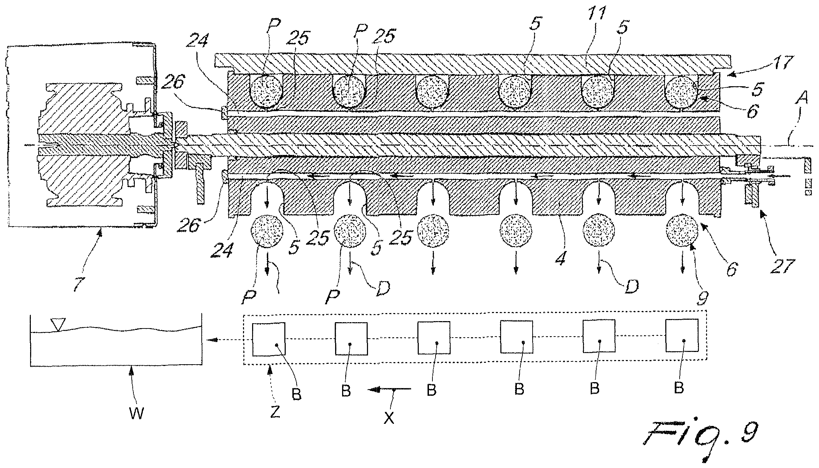

The method 100 can be actuated in a plant, not shown here, consisting of a conventional stretching station for obtaining stretched curd F of cheese, a forming station fed with the stretched curd F to obtain portions P of the curd, unloaded directly at entrance to a packaging station Z downstream of which a hardening station W is provided, to obtain already packaged cheeses M, see fig. 9 for example.

The stretching and packaging stations Z are not described in detail here, since they can use conventional stretching machines and packaging machines of a known type.

The hardening station W consists of at least a bath of cooling liquid (water) at a controlled temperature.

On the contrary, the forming station can provide a forming machine of the type described hereafter.

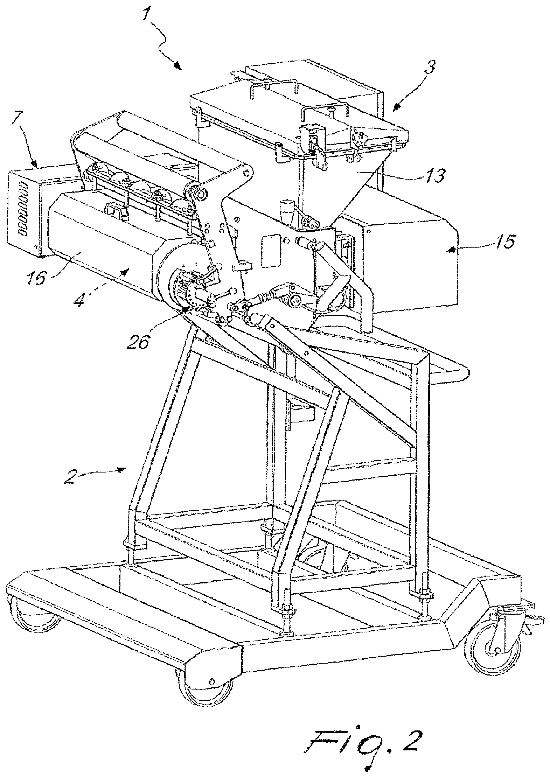

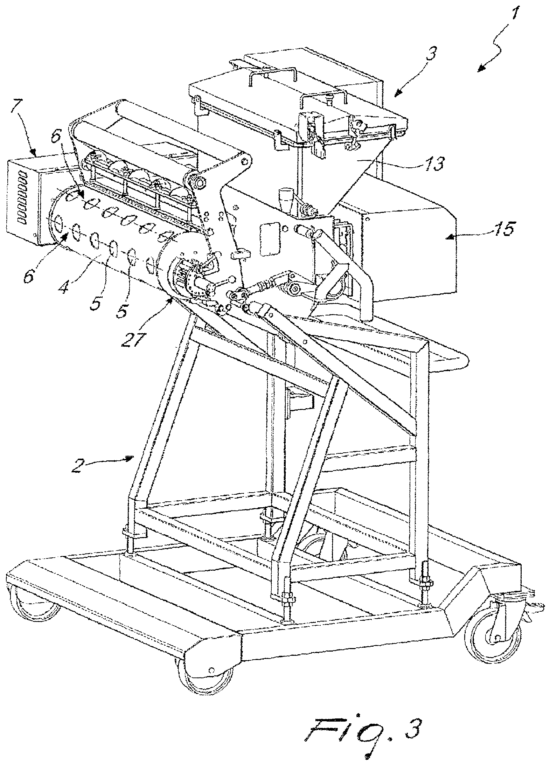

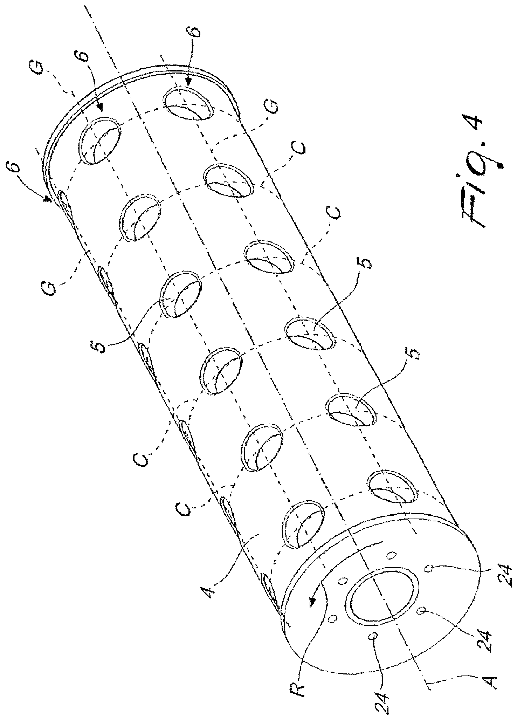

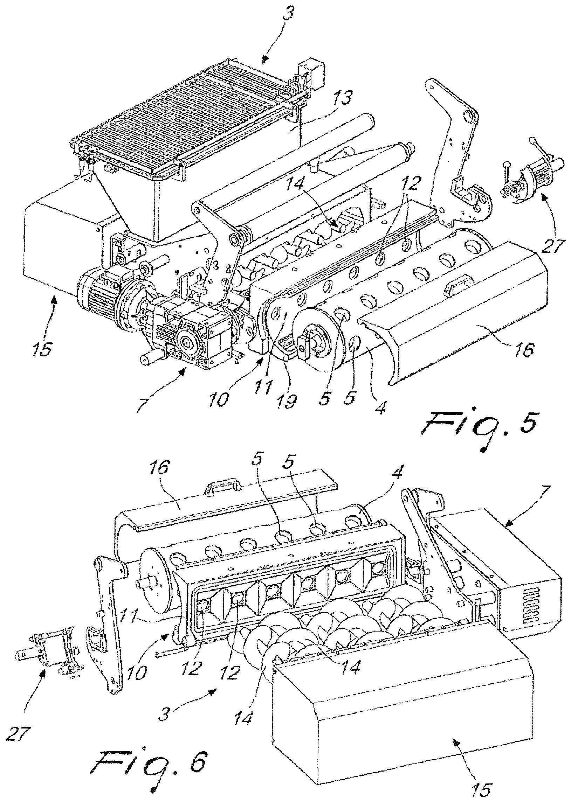

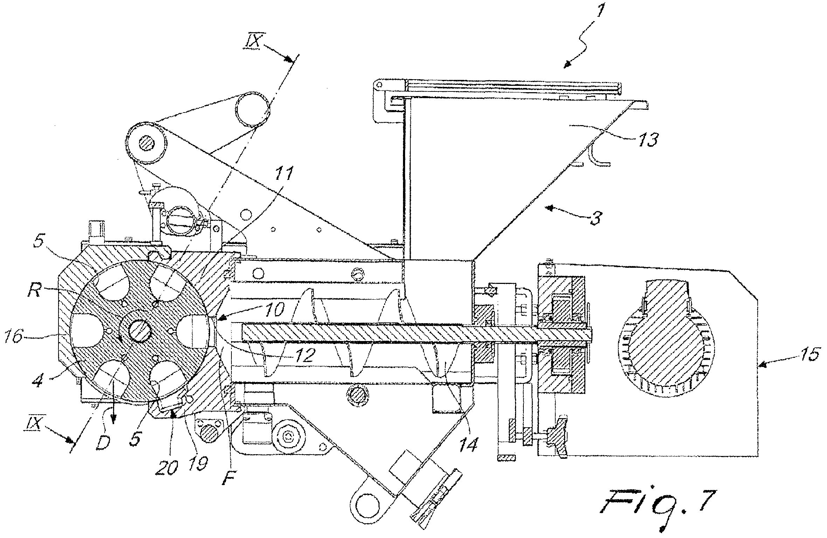

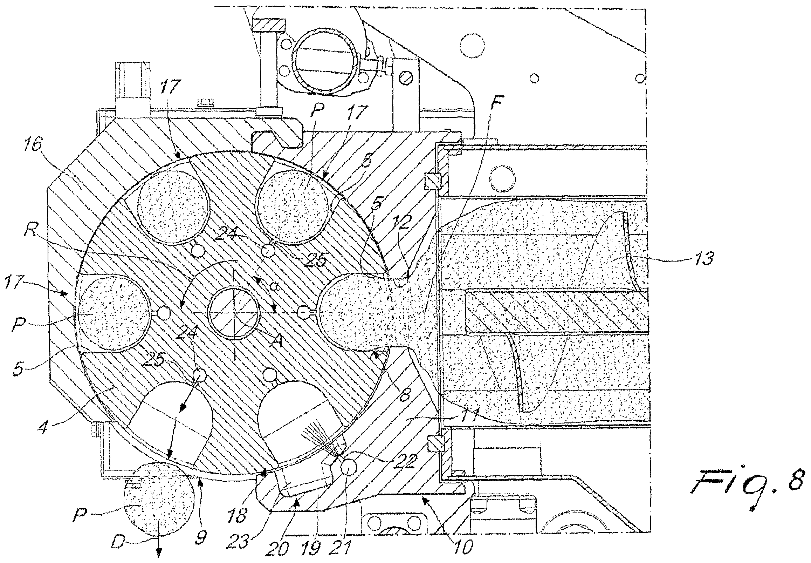

With particular reference to figs. 2-9, a forming machine for processing stretched-curd cheeses, usable in a plant and in a method according to the invention, is denoted in its entirety by the reference number 1.

The machine 1 comprises a frame 2 to support feed means 3 to feed stretched curd F toward a forming roll 4, essentially cylindrical in shape, having a plurality of cavities 5 on its lateral surface, which are able to house respective portions P of stretched curd F.

The cavities 5 have a shape and size substantially corresponding to that of the portions P of stretched curd F to be obtained.

In the embodiment shown, the frame 2 rests on wheels so that it can be moved in the processing plant, but alternative embodiments are not excluded.

The cavities 5 are distributed on the lateral surface of the forming roll 4 along a plurality of rows 6 disposed in correspondence with respective generator lines G of the roll 4, distributed with a constant angular pitch (α).

Moreover, the cavities 5 are distributed on a plurality of circumferential lines C of the forming roll 4 so that each row 6 has one cavity 5 in correspondence with each of the circumferential lines C.

In this way the portions P are unloaded in an orderly manner in substantially vertical exit directions D, distributed like the circumferential lines C, and can be sent directly to subsequent processing, for example packaging.

The forming roll 4 is supported by the frame 2 rotating around its longitudinal axis A, and is associated with motor means to drive it in rotation.

During the rotation of the forming roll 4, each row 6 of cavities 5 is able to transit through at least an angular loading position 8 and an angular unloading position 9.

Advantageously, the motor means 7 are the intermittent type, to drive the rotation of the forming roll 4 discontinuously for a circumferential arc equal to the angular pitch (α) with which the rows 6 of cavities 5 are distributed.

The machine 1 also provides separation means 10, interposed between the feed means 3 and the forming roll 4, which provide a partition 11, preferably made of plastic material, equipped with a plurality of apertures 12 for the passage of the stretched curd F from the feed means 3 to the cavities 5 of the forming roll 4, each of which is disposed in correspondence with a respective circumferential line C of the roll 4.

The partition 11 has its surface facing toward the forming roll 4 which is concave with a cylindrical shape, so as to partly surround the roll 4.

The feed means 3 provide a hopper 13 to load the stretched curd F in communication with the entrance ends of a plurality of feed screws 14, disposed parallel to each other, each of which has the corresponding exit end facing a corresponding aperture 12 of the partition 11.

Advantageously the feed screws 14 are associated with intermittent drive means 15, not described in detail as they are the conventional type. In this way the feed screws 14 are driven when the forming roll 4 is stationary for filling the row 6 of cavities 5 positioned in correspondence with the angular loading position 8 with respective portions P of stretched curd F, and are deactivated during the rotation of the roll 4 to avoid pressing the stretched curd F against its lateral surface.

The machine 1 comprises an appendix 16 associated with the partition 11 to cover the forming roll 4 between the angular loading position 8 as far as near to the angular unloading position 9 in the direction of rotation R of the roll 4.

In the embodiment shown here, the appendix 16 consists of a sort of lid coupled resting on the partition 11, which has its surface facing the forming roll 4 concave with a cylindrical shape, so as to partly wind on the roll 4.

In the rotation of the forming roll 4, at least three angular transfer positions 17 are provided between the loading position 8 and the unloading position 9 in the direction of rotation R of the roll 4, through which the forming roll 4 transits, being enclosed inside the partition 11 and the appendix 16 to prevent contaminations of the portions P of stretched curd F enclosed in the cavities 5.

Furthermore, an intermediate angular position 18 is provided between the angular loading position 8 and the angular unloading position 9 in the direction of rotation R of the forming roll 4, in correspondence with which a covering flap 19 of the roll 4 is provided, associated with the partition 11. In the embodiment shown here, the flap 19 is defined integral with the partition 11 in a single body, but alternative embodiments are not excluded.

In correspondence with the flap 19, washing means 20 are provided to wash the cavities 5 in transit through the intermediate angular position 18 downstream of the unloading of the portions P of stretched curd F, so as to sanitize and cool the cavities 5 before they are filled again.

The washing means 20 consist of a pipe 21 made inside the flap 19, communicating with a plurality of orifices 22 facing toward the cavities 5 in transit, which is fed with a washing liquid (water, to which a suitable disinfectant has possibly been added) and a longitudinal chamber 23 facing toward the cavities 5 in transit to collect the washing liquid, which is made on the surface of the flap 19 facing the cavities 5 and in communication with an outlet (not shown).

In the embodiment shown here, the forming roll 4 includes six rows 6 comprising six cavities 5 each, which are distributed with an angular pitch (α) of 60°. In this case, in the direction of rotation R of the forming roll 4 an angular loading position 8 is provided in correspondence with the apertures 12 of the partition 11, three angular transfer positions 17 in which the forming roll 4 is covered by the partition 11 and the appendix 16, an angular unloading position 9 facing downward and in which the roll 4 is open toward the outside so as to release the portions P of stretched curd F, and an intermediate angular position 18 in correspondence with the flap 19 with the corresponding washing means 20.

Naturally, the number of rows 6 of cavities 5 and the number of cavities 5 for each row 6 can vary depending on the sizes of the portion P to be obtained and on production requirements. Consequently, the number of angular positions in the rotation of the forming roll 4 can also vary, being equal to the number of rows 6.

To promote the release of the portions P in correspondence with the angular unloading position 9, the forming roll 4 can be equipped internally with a longitudinal channel 24 in correspondence with each row 6 of cavities 5, which is in communication with a plurality of branches leading into the cavities 5 of the corresponding row 6. The channels 24 are open in correspondence with a first side of the forming roll 4, while they are closed by corresponding caps 26 on the opposite side of the roll 4.

The machine 1 provides suitably filtered compressed air feed means 27, not described in detail as they are the conventional type, which are supported by the frame 2 in correspondence with the first side of the forming roll 4, so as to be alternately in communication with the channel 24 of the row 6 of cavities 5 in transit through the angular unloading position 9.

Every time the forming roll 4 stops moving, the feed means 27 are driven to promote the expulsion of the portions P of stretched curd F contained in the cavities 5 that are in correspondence with the angular unloading position 9.

With reference to one row 6 of cavities 5, the functioning of the present invention is as follows: the stretched curd F introduced into the hopper 13 is transferred by the feed screws 14 toward the forming roll 4.

With the forming roll 4 stationary, from the exit ends of the feed screws 14, through the apertures 12 of the partition 11, the stretched curd F is pressed inside the row 6 of cavities 5 positioned in correspondence with the angular loading position 8. When the forming roll 4 starts rotating again, the stretched curd F collected in the cavities 5 is cut from the remaining mass, rubbing against the upper edge of the apertures 12, so that in each cavity 5 a portion P of stretched curd F remains, with the shape and volume corresponding to that of the cavity 5.

In the intermittent rotation of the forming roll 4, the cavities 5 transit through the angular transfer positions 17 until they are positioned in correspondence with the angular unloading position 9 where, due to gravity and with the aid of jets of compressed air exiting from the branches 25, the portions P of stretched curd F are expelled in the respective exit directions D, leaving the cavities 5 free.

With the next step, the cavities 5 find themselves stationary in correspondence with the intermediate angular position 18. The activation of the washing means 20 allows to disinfect and cool the cavities 5 before they are refilled. When the cavities 5 are positioned in correspondence with the angular loading position 8, the cycle described above begins again.

With reference for example to fig. 9, the portions P of stretched curd exiting from the cavities 5 are put in packages B, for example envelopes, which are situated in correspondence with the forming roll 4.

The packages B are shown schematically inside the packaging station Z.

The packages B can be, for example, already closed at the bottom and at the sides and arrive in direction X under the forming roll 4, so as to be positioned under a row 6 of cavities 5.

The direction X along which the packages B move and along which the packaging is carried out is substantially horizontal.

The direction X along which the packages B are aligned is substantially parallel to the longitudinal axis A of the forming roll 4.

It can therefore be provided that the portions P of stretched curd are introduced through gravity into the packages B below, possibly with the aid of compressed air or suchlike, by the compressed air feed means 27.

It can be provided, for example, that the packages B arrive in proximity to the forming roll 4 with the upper edges brought reciprocally close together, therefore, by means of suitable spreading means, the edges are widened to allow to introduce the portions P of stretched curd.

Suitable means will be provided in the plant that signal the arrival of the packages B under the forming roll 4 and their correct position and alignment, so as to accommodate the portions P of stretched curd.

It is provided to introduce into the packages B a suitable quantity of protective liquid. The protective liquid can be introduced before and/or when the portions P of stretched curd are introduced.

Once the portions P of stretched curd have been introduced into the corresponding packages B, with the relative protective liquid, the packaging is completed, for example by closing and welding the upper edges, between which the portions P of stretched curd have been introduced.

Therefore, at exit from the packaging station Z, the packaged portions E indicated in fig. 1 are substantially obtained.

The edges can be closed for example by welding, heat welding or suchlike.

Subsequently, the packaged portions E, comprising the packages B and containing the portions P of stretched curd and the protective liquid, are transferred as we said to the hardening and cooling station W.

Therefore, as mentioned before, the packaging step advantageously precedes the cooling and hardening step.

The station W can comprise one or more cooling tanks located in sequence, if it is desired to perform a cooling step in several phases, with increasing temperatures, so as to obtain an optimum hardening.

For example, it is possible to provide a first cooling step at a few degrees above zero, for example at about 1-5°C, for about 15-30 minutes, and then a second less extreme cooling step, at higher temperatures.

Alternatively, it would also be possible to provide two or more forming rolls 4, able to allow the release of portions P of stretched curd in two or more rows 6, in correspondence with which suitably aligned packages B will be positioned, as shown schematically in fig. 9.

In practice, we have seen how the invention described obtains the proposed purposes, and in particular we emphasize that the process and plant according to the present invention prevent bacterial contamination of the cheeses being processed before packaging takes place, thus increasing their quality and duration before consumption.

Moreover, the invention allows to preserve the integrity and esthetic attractiveness of the product.

Furthermore, the invention allows to simplify the machinery used, in particular with regard to the hardening step.

Not least, the invention makes it possible to not penalize the production capacity of the process.

The invention thus conceived can be subjected to numerous modifications and variants, all coming within the field of the inventive concept.

Moreover, all the details can be replaced by other, technically equivalent elements.

In practice the materials used, and the contingent shapes and sizes, can be any whatsoever, depending on requirements, without departing from the field of protection of the following claims.

It is clear that modifications and/or additions of parts may be made to the method and plant for processing stretched-curd cheeses as described heretofore, without departing from the field and scope of the present invention as defined by the appended claims.

It is also clear that, although the present invention has been described with reference to some specific examples, a person of skill in the art shall certainly be able to achieve many other equivalent forms of method and plant for processing stretched-curd cheeses, having the characteristics as set forth in the claims and hence all coming within the field of protection defined thereby.

In the following claims, the sole purpose of the references in brackets is to facilitate reading: they must not be considered as restrictive factors with regard to the field of protection claimed in the specific claims.

## Claims

1. Method (100) for processing stretched-curd cheeses, wherein it comprises the following sequence of steps:
- a step of stretching (101) the melted cheese to obtain stretched curd (F);
- a step of forming (102) said stretched curd (F) to obtain portions (P) of stretched curd with predefined shape and weight;
- a step of packaging (103) said portions (P) of stretched curd to obtain packaged portions (E); **characterized in that** the method then comprises:
- a step of hardening (104) said packaged portions (E) in a bath with a controlled temperature to obtain already packaged stretched-curd cheeses (M), wherein said hardening step (104) comprises one or more cooling steps at a controlled temperature.

2. Method as in claim 1, **characterized in that** said packaging step provides the direct release of said portions (P) of stretched curd in a series of packages (B) located downstream of said forming step (102) which provides at least a forming roll (4) to form said portions (P) of stretched curd.

3. Method as in claim 2, **characterized in that,** in said release step of the portions (P) of stretched curd, said packages (B) are aligned in an alignment direction (X) in proximity to said forming roll (4).

4. Method as in claim 3, **characterized in that** said alignment direction (X) of the packages (B) is substantially horizontal, therefore the packaging step (103) takes place substantially with packages (B) disposed horizontally.

5. Method as in claim 3, **characterized in that** said alignment direction (X) of the packages (B) is substantially parallel to a longitudinal axis of rotation (A) of said forming roll (4).

6. Method as in claim 2, **characterized in that** said packaging step (103) provides to introduce protective liquid inside the packages (B).

7. Plant for processing stretched-curd cheeses, suitable to perform the method as in any of the claims hereinbefore, said plant comprising a stretching station to obtain stretched-curd cheese, a forming station of said stretched curd to obtain portions (P) of stretched curd unloaded directly at entrance to a packaging station (Z) downstream of which a hardening station (W) is provided, to obtain already packaged stretched-curd cheeses, **characterized in that** said hardening station (W) consists of at least a bath of cooling liquid at a controlled temperature.

8. Plant as in claim 7, **characterized in that** said forming station comprises a forming machine (1) provided with at least one forming roll (4).

9. Plant as in claim 8, **characterized in that** said forming roll (4) comprises a series of cavities (5) in which the portions (P) of stretched curd are positioned, said cavities (5) being associated with feed means (27) to feed compressed air able to promote the passage of said portions (P) of stretched curd from said cavities (5) to said packages (B) located in proximity to the forming roll (4).

## Patentansprüche

1. Verfahren (100) zum Verarbeiten von Fadenkäse, das folgende Abfolge von Schritten umfasst:
- einen Schritt eines Ziehens (101) eines geschmolzenen Käses, um gezogenen Käsebruch (F) zu erhalten,
- einen Schritt eines Formens (102) des gezogenen Käsebruchs (F), um Portionen (P) des gezogenen Käsebruchs mit einer zuvor festgelegten Form und einem zuvor festgelegten Gewicht zu erhalten,
- einen Schritt eines Verpackens (103) der Portionen (P) des gezogenen Käsebruchs, um verpackte Portionen (E) zu erhalten;
**dadurch gekennzeichnet, dass** das Verfahren einen nachfolgenden Schritt umfasst:
- einen Schritt eines Aushärtens (104) der verpackten Portionen (E) in einem Bad mit einer gesteuerten Temperatur, um bereits verpackten Fadenkäse (M) zu erhalten, wobei das Aushärten (104) einen oder mehrere Schritte eines Abkühlens bei einer gesteuerten Temperatur umfasst.

2. Verfahren nach Anspruch 1, wobei das Verpacken (103) ein direktes Abgeben der Portionen (P) des gezogenen Käsebruchs in eine Reihe von Packungen (B) umfasst und nach dem Formen (102) eingereiht ist, das mindestens eine Formierwalze (4) bereitstellt, um die Portionen (P) des gezogenen Käsebruchs zu formen.

3. Verfahren nach Anspruch 2, wobei beim direkten Abgeben der Portionen (P) des gezogenen Käsebruchs die Packungen (B) in der Nähe der Formierwalze (4) in einer Ausrichtung (X) ausgerichtet werden.

4. Verfahren nach Anspruch 3, wobei die Ausrichtung (X) der Packungen (B) weitgehend horizontal ist, so dass das Verpacken (103) stattfindet, während die Packungen (B) weitgehend horizontal angeordnet sind.

5. Verfahren nach Anspruch 3, wobei die Ausrichtung (X) der Packungen (B) weitgehend parallel zu einer longitudinalen Drehachse (A) der Formierwalze (4) ist.

6. Verfahren nach Anspruch 2, wobei das Verpacken (103) ein Zugeben einer schützenden Flüssigkeit in den Packungen (B) umfasst.

7. Anlage zum Verarbeiten von Fadenkäsen, geeignet zum Durchführen eines Verfahrens nach einem der vorhergehenden Ansprüche, Folgendes umfassend:
eine Ziehvorrichtung, um daraus gezogenen Käsebruch (F) zu beziehen,
eine Formvorrichtung für den gezogenen Käsebruch (F), um daraus Portionen (P) des gezogenen Käsebruchs zu beziehen, wobei die Portionen (P) des gezogenen Käsebruchs direkt am Eingang zu einer Verpackvorrichtung (Z) abgeladen werden,
eine Aushärtevorrichung (W), der Verpackvorrichtung (Z) nachgeschaltet, um bereits verpackte Fadenkäse zu beziehen;
**dadurch gekennzeichnet**, dassdie Aushärtevorrichung (W) aus mindestens einem Bad mit einer Kühlflüssigkeit bei einer gesteuerten Temperatur besteht.

8. Anlage nach Anspruch 7, bei der die Formvorrichtung eine Formiermaschine (1) mit mindestens einer Formierwalze (4) umfasst.

9. Anlage nach Anspruch 8, bei der die Formierwalze (4) eine Reihe von Vertiefungen (5) umfasst, in welche die Portionen (P) des gezogenen Käsebruchs eingebracht werden, wobei die Vertiefungen (5) mit Zuleitungen (27) verbunden sind, so dass sich Druckluft zuführen lässt, die einen Übertritt der Portionen (P) des gezogenen Käsebruchs von den Vertiefungen (5) in die benachbart zu der Formierwalze (4) angeordneten Packungen (B) befördern kann.

## Revendications

1. Procédé (100) de traitement de fromages à pâte filée, **caractérisée en ce qu'**il comprend la séquence d'étapes suivante :
- une étape d'étirement (101) du fromage fondu pour obtenir un caillé filé (F) ;
- une étape de formation (102) dudit caillé filé (F) pour obtenir des portions (P) de caillé filé de forme et de poids prédéfinis ;
- une étape de conditionnement (103) desdites portions (P) de caillé filé pour obtenir des portions conditionnées (E) ;
**caractérisé en ce que** la méthode comprend alors :
- une étape de durcissement (104) desdites portions emballées (E) dans un bain à température contrôlée pour obtenir des fromages à pâte filée déjà emballés (M), dans laquelle ladite étape de durcissement (104) comprend une ou plusieurs étapes de refroidissement à une température contrôlée.

2. Procédé selon la revendication 1, **caractérisé en ce que** ladite étape d'emballage prévoit la libération directe desdites portions (P) de caillé filé dans une série d'emballages (B) situés en aval de ladite étape de formation (102) qui prévoit au moins un rouleau de formation (4) pour former lesdites portions (P) de caillé filé.

3. Procédé selon la revendication 2, **caractérisé en ce que,** dans ladite étape de libération des portions (P) de caillé filé, lesdits paquets (B) sont alignés dans une direction d'alignement (X) à proximité dudit rouleau de formage (4).

4. Procédé selon la revendication 3, **caractérisé en ce que** ladite direction d'alignement (X) des emballages (B) est sensiblement horizontale, par conséquent l'étape d'emballage (103) a lieu sensiblement avec les emballages (B) disposés horizontalement.

5. Procédé selon la revendication 3, **caractérisé en ce que** ladite direction d'alignement (X) des paquets (B) est sensiblement parallèle à un axe de rotation longitudinal (A) dudit rouleau de formage (4).

6. Procédé selon la revendication 2, **caractérisé en ce que** ladite étape d'emballage (103) prévoit d'introduire un liquide de protection à l'intérieur des emballages (B).

7. Installation pour le traitement de fromages à pâte filée, adaptée pour mettre en œuvre le procédé selon l'une quelconque des revendications ci-dessus, ladite installation comprenant un poste d'étirage pour obtenir du fromage à pâte filée, un poste de formage dudit caillé filé pour obtenir des portions (P) de caillé filé déchargées directement à l'entrée d'un poste de conditionnement (Z) en aval duquel est prévu un poste de durcissement (W), pour obtenir des fromages à pâte filée déjà conditionnés, **caractérisée en ce que** ledit poste de durcissement (W) consiste en au moins un bain de refroidissement à une température contrôlée.

8. Installation selon la revendication 7, **caractérisée en ce que** ladite station de formage comprend une machine de formage (1) munie d'au moins un rouleau de formage (4).

9. Installation selon la revendication 8, **caractérisée en ce que** ledit rouleau de formage (4) comprend une série de cavités (5) dans lesquelles les portions (P) de caillé filé sont positionnées, lesdites cavités (5) étant associées à des moyens d'alimentation (27) pour fournir de l'air comprimé capable de favoriser le passage desdites portions (P) de caillé filé desdites cavités (5) auxdits emballages (B) situés à proximité du rouleau de formage (4).
